# EUROPEAN PATENT SPECIFICATION

(11) **EP 1 900 846 B1**
(45) Date of publication and mention of the grant of the patent: **28.09.2011**
(21) Application number: 06767259.2
(22) Date of filing: 23.06.2006
(51) Int. Cl.: C23C 22/34, B05D 3/10, B05D 7/14, B32B 15/08, C09D 183/04

(54) **METHOD AND AGENT FOR CHEMICAL CONVERSION TREATMENT AND CHEMICALLY CONVERSION-TREATED MEMBERS**
VERFAHREN UND MITTEL ZUR CHEMISCHEN UMWANDLUNGSBEHANDLUNG UND EINER CHEMISCHEN UMWANDLUNGSBEHANDLUNG UNTERWORFENE ELEMENTE
PROCÉDÉ ET AGENT POUR TRAITEMENT DE CONVERSION CHIMIQUE ET ÉLÉMENTS TRAITÉS PAR CONVERSION CHIMIQUE

(30) Priority: 01.07.2005 JP 2005193430
(43) Date of publication of application: 19.03.2008
(73) Proprietor: HONDA MOTOR CO., LTD., Tokyo 107-8556 (JP); Nippon Paint Co., Ltd., Osaka-shi, Osaka 531-8511 (JP)
(72) Inventor: SHINOMIYA, Mitsuo, NIPPON PAINT CO., LTD., Sinagawa-ku, Tokyo 1408675 (JP); ANDO, Katsutoshi, HONDA R & D CO., LTD., Wako-shi, Saitama 3510193 (JP); MURAI, Yasuhito, HONDA R & D CO., LTD., Wako-shi, Saitama 3510193 (JP)
(74) Representative: Cabinet Plasseraud
(86) International application number: PCT/JP2006/312642
(87) International publication number: WO 2007/004449

(56) References cited:
- JP-A- 2004 218 070
- JP-A- 2006 161 110
- US-A- 5 720 902
- US-A- 5 801 217

## Description

### TECHNICAL FIELD

The present invention relates to a method of chemical conversion treatment, and more specifically, relates to a method of chemical conversion treatment suited for pretreatment prior to painting of general industrial products, particularly automotive bodies, and also relates to a chemical conversion treatment agent which can be used in the method of chemical conversion treatment, and a chemical conversion treated member formed by the method of chemical conversion treatment.

### BACKGROUND ART

Conventionally, automotive bodies are configured with a base of metallic structures of soft steel plates such as unprocessed iron materials and galvanized (i.e., zinc-coated) steel plates, as well as aluminum, and the like. Exemplary surface treatment techniques for these items includes treatment with zinc phosphate, in which a zinc phosphate coating film is deposited on a material surface, thereby ensuring corrosion resistance and adhesiveness of the coating (see, Patent Document 1).

However, recently a broad range of materials have been for the metallic structure of automotive bodies in order to achieve weight saving. In particular, application of high-tensile steel plates has been rapidly increasing. Desired characteristics for the metallic structure such as strength, elongation and the like vary depending on the part of the body where they are applied. For example, with respect to strength, there are a variety of classes, i.e., from a 270 MPa class to a 1500 MPa class or greater. Among these, steel plates having a strength of 440 MPa or greater are referred to as high-tensile steel plates, while those having a strength of less than 440 MPa are referred to as soft steel plates, in general.

With such a broad range of materials available for the metallic structure, the composition and production method of the metallic structure may vary depending on the required characteristics. Particularly, as the amount of Si component increases, etchability of the material surface deteriorates, leading to non-uniform deposition of a zinc phosphate coating when using conventional zinc phosphate treatment techniques. Thus, it is not easy to ensure the corrosion resistance and adhesiveness of the coated film. Furthermore, in ultra high-tensile steel plates having strength exceeding 1000 MPa, accuracy of the size attained in forming is inferior according to common cold stamping production methods. Therefore, hot hardening such as induction hardening is carried out following formation, or a hot stamping production method is employed in which heating is conducted during forming. Thus, it becomes more difficult to ensure the adhesiveness and corrosion resistance of the coated film.

Accordingly, surface treatment techniques for deposition of an amorphous coating film have been studied. For example,

Patent Document 2 discloses a method of chemical conversion treatment constituted as follows.

In the method of chemical conversion treatment, a metallic structure is treated with a chemical conversion treatment agent to form a conversion coating film, the chemical conversion treatment agent includes zirconium, fluorine, an alkoxysilane that contains an amino group, and an alkoxysilane that contains a hydroxyl group.

According to the method of chemical conversion treatment, zirconium and fluorine respectively serve as a component for forming the conversion coating film and as an etching agent on the metallic structure. Thus, corrosion resistance and adhesiveness of the metallic structure can be improved. Furthermore, the action of the alkoxysilane that contains an amino group on both the conversion coating film and the coated film formed thereafter enables improvement in the adhesiveness of both films.
Patent Document 1: Japanese Unexamined Patent Application Publication No. H10-204649
Patent Document 2: Japanese Unexamined Patent Application Publication No. 2004-218070

### DISCLOSURE OF THE INVENTION

### Problems to be Solved by the Invention

According to the method for a zircon coating film-based surface treating in Patent Document 2, the surface treatment of, for example, high-tensile steel plates was not studied.

Hence, a method of chemical conversion treatment that enables formation of a chemical conversion treatment coating film has not been established hitherto which can achieve sufficient base metal concealability, coated film adhesiveness and corrosion resistance in any metallic structures including, for example, high-tensile steel plates. Therefore, establishment of such a method of chemical conversion treatment is advantageous for, e.g., automotive bodies, automobile parts and the like configured with these materials.

The present invention was made in order to solve the aforementioned problems, and an object of the invention is to provide: a method of chemical conversion treatment that enables formation of a chemical conversion treatment coating film which can achieve sufficient base metal concealability, coated film adhesiveness and corrosion resistance on the surface of any metallic structure; a chemical conversion treatment agent which can be used in the method of chemical conversion treatment; and a chemical conversion treated member formed by the method of chemical conversion treatment.

### Means for Solving the Problems

The present inventors thoroughly investigated the foregoing problems. Consequently, it was found that the above problems could be solved by using a certain chemical conversion treatment agent which further includes an alkoxysilane that contains a hydroxyl group in addition to zirconium, fluorine, and an alkoxysilane that contains an amino group. Accordingly, the present invention was accomplished. More specifically, the present invention provides the following.
(1) In a first aspect of the present invention, a method of chemical conversion treatment for forming a chemical conversion coating film including treating a metallic structure with a chemical conversion treatment agent is provided, wherein: the chemical conversion treatment agent includes zirconium, fluorine, an alkoxysilane that contains an amino group, and an alkoxysilane that contains a hydroxyl group; the content of zirconium in the chemical conversion treatment agent is no less than 100 ppm and no greater than 700 ppm expressed with respect to the metal content; the content of the alkoxysilane that contains an amino group is no less than 50 ppm and no greater than 500 ppm based on the solid content; the molar ratio of fluorine to zirconium is no less than 3.5 and no greater then 7.0; and the pH of the chemical conversion treatment agent is no less than 2.8 and no greater than 4.5.
(2) In a second aspect of the present invention, the method of chemical conversion treatment according to the first aspect is provided, wherein the content of the alkoxysilane that contains a hydroxyl group in the chemical conversion treatment agent is no less than 10 ppm and no greater than 100 ppm based on the solid content.
(3) In a third aspect of the present invention, the method of chemical conversion treatment according to the first or second aspect is provided, wherein the alkoxysilane that contains a hydroxyl group is represented by the following general formula (1): 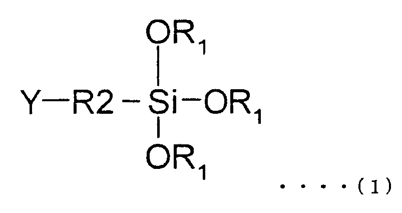 wherein: each R₁ independently represents an alkyl group having 1 to 4 carbon atoms; R₂ represents an alkylene group having 1 to 6 carbon atoms; and Y represents a gluconamide group, or an amino group represented by the formula: R₃R₄N-; wherein: R₃ represents a hydroxyalkyl group having 1 to 6 carbon atoms, or an alkyl group having 1 to 6 carbon atoms; and R₄ represents a hydroxyalkyl group having 1 to 6 carbon atoms.
(4) In a fourth aspect of the present invention, a chemical conversion treated member is provided, including a conversion coating film formed by the method of chemical conversion treatment according to any one of the first to third aspects.
(5) In a fifth aspect of the present invention, a chemical conversion treatment agent is provided, including zirconium, fluorine, an alkoxysilane that contains an amino group, and an alkoxysilane that contains a hydroxyl group, wherein: the content of zirconium is no less than 100 ppm and no greater than 700 ppm expressed with respect to the metal content; the content of the alkoxysilane that contains an amino group is no less than 50 ppm and no greater than 500 ppm based on the solid content; the content of the alkoxysilane that contains a hydroxyl group is no less than 10 ppm and no greater than 100 ppm based on the solid content; the molar ratio of fluorine to zirconium is no less than 3.5 and no greater then 7.0; and the pH of the chemical conversion treatment agent is no less than 2.8 and no greater than 4.5.

### Effects of the Invention

According to the present invention, a method of chemical conversion treatment that enables formation of a chemical conversion treatment coating film, and which can achieve sufficient base metal concealability, coated film adhesiveness and corrosion resistance of the surface of metallic structures such as, for example, cold-rolled steel plates (soft steel plates, high-tensile steel plates), hot-rolled steel plates (soft steel plates, high-tensile steel plates), steel plates such as zinc-coated steel plates and aluminum-coated steel plates, aluminum plates, and the like; a chemical conversion treatment agent which can be used in the method of chemical conversion treatment; and a chemical conversion treated member formed by the method of chemical conversion treatment can be provided.

Therefore, according to the present invention, since handling of metallic structures having a large variety of compositions is enabled, chemical conversion treated members having desired characteristics can be provided while ensuring a sufficient amount of the coating film, and achieving both sufficient base metal concealability and coated film adhesiveness. Moreover, the coating film can also be readily formed on an edge part of the material, and generation of rust can be prevented, which has conventionally been a concern on parts where the base iron metal is exposed due to cracking of the coating or scratches generated in the course of formation, and the like.

### PREFERRED MODE FOR CARRYING OUT THE INVENTION

Hereinafter, embodiments of the present invention will be explained.

### Chemical Conversion Treatment Agent

The present invention is directed to a method of chemical conversion treatment for forming a chemical conversion coating film including treating a metallic structure with a chemical conversion treatment agent, wherein the chemical conversion treatment agent includes zirconium, fluorine, an alkoxysilane that contains an amino group, and an alkoxysilane that contains a hydroxyl group.

### Zirconium Component

Zirconium included in the chemical conversion treatment agent is a component for forming the conversion coating film. Formation of the conversion coating film containing zirconium on the metallic structure enables improvement in the corrosion resistance and abrasion resistance of the base material.

When the surface treatment of a metallic structure is conducted with the chemical conversion treatment agent containing zirconium for use in the present invention, the solubilizing reaction of the metal that constitutes the metallic structure results in formation of a hydroxide or an oxide of zirconium as a result of the dissociation of fluorine from ZrF₆²⁻ arising from the metal ions solubilized into the chemical conversion treatment agent, and because the pH at the boundary is elevated. Accordingly, the hydroxide or the oxide of zirconium is considered to be deposited on the surface of the metallic structure. Since the chemical conversion treatment agent used in the present invention is a reactive chemical conversion treatment agent, it can also be used for immersion of a metallic structure having a complicated shape. Furthermore, since a conversion coating film that rigidly adheres to the metallic structure can be attained by a chemical reaction, washing with water can be also conducted after the treatment.

The source of zirconium is not particularly limited, and examples thereof include alkali metal fluorozirconates such as K₂ZrF₆, fluorozirconates such as (NH₄)₂ZrF₆, soluble fluorozirconates such as H₂ZrF₆, zirconium fluoride, zirconium oxide, zirconyl nitrate, and zirconium carbonate and the like.

### Content of Zirconium

The content of zirconium included in the chemical conversion treatment agent used in the present invention falls within a range of no less than 100 ppm and no greater than 700 ppm expressed with respect to the metal content. When the content is less than 100 ppm, sufficient amount of the coating film cannot be attained on the metallic structure. In contrast, when the content exceeds 700 ppm, economical disadvantages arise as no greater effect can be attained. The content is more preferably no less than 200 ppm and no greater than 550 ppm expressed with respect to the metal content.

### Fluorine Component

Fluorine included in the chemical conversion treatment agent used in the present invention plays a role as an etching agent of the metallic structure, and as a complexing agent of zirconium. Although the source of fluorine is not particularly limited, examples thereof include fluorides such as hydrofluoric acid, ammonium fluoride, fluoboric acid, ammonium hydrogen fluoride, sodium fluoride, and sodium hydrogen fluoride. Furthermore, a complex fluoride can be also used as the source, and examples thereof include hexafluorosilicic acid salts, specifically, hydrofluosilicic acid, zinc hydrofluosilicicate, manganese hydrofluosilicate, magnesium hydrofluosilicate, nickel hydrofluosilicate, iron hydrofluosilicate, calcium hydrofluosilicate, and the like.

### Content of Fluorine Component

With respect to the content of fluorine included in the chemical conversion treatment agent used in the present invention, the molar ratio of fluorine to zirconium falls within a range of no less than 3.5 and no greater than 7.0. When the molar ratio of fluorine to zirconium is less than 3.5, precipitation may result as the solution becomes unstable. In contrast, when the ratio exceeds 7.0, disadvantage results due to failure in the sufficient formation of the coating film as a result of stabilization of a zirconium-fluorine complex, and a reduction in the etching force. The molar ratio is more preferably no less than 3.8 and no greater than 7.0.

### Alkoxysilane Containing an Amino Group

The alkoxysilane containing an amino group included in the chemical conversion treatment agent used in the present invention is a compound, which has at least one alkyl chain in the molecule, in which the at least one alkyl chain has at least one amino group, and which includes an alkoxy group as a functional group that binds to the rest of the dangling bond of silicon. Since the alkoxysilane containing an amino group acts on both the conversion coating film and the coated film formed later, adhesiveness of both films can be improved.

Such an effect arises as silanol produced by hydrolysis of the alkoxy group is covalently adsorbed on the surface of the metallic structure, or on the surface of the zirconium coating film.

In addition, since the alkoxysilane containing an amino group included in the conversion coating film forms a chemical bond not only on the metallic structure but also on the coated film formed later, it is believed to serve in improving the adhesiveness to one another.

The alkoxysilane containing an amino group is not particularly limited, and examples thereof include known alkoxysilane such as N-2(aminoethyl) 3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, 3-triethexysilyl-N-(1,3-dimethylbutylidene)propylamine, N-phenyl-3-aminopropyltrimethoxysilane, N,N-bis[3-(trimethoxysilyl)propyl]ethylenediamine, and 3-aminopropyltrichlorosilane, and the like. Moreover, KBM-602, KBM-603, KBE-603, KBM-903, KBE-9103, KBM-573 (manufactured by Shin-Etsu Chemical Co., Ltd.), XS1003 (manufactured by Chisso Corporation) and the like which have been commercially available as the alkoxysilane containing an amino group can be also used directly. Among these, N-2(aminoethyl)3-aminopropyltriethoxysilane (APS-L), N-2(aminoethyl)3-aminopropyltrimethoxysilane (APS-L), 3-aminopropyltriethoxysilane (APS-S), and 3-aminopropyltrimethoxysilane are preferred.

### Content of Alkoxysilane Containing an Amino Group

The content of the alkoxysilane containing an amino group included in the chemical conversion treatment agent used in the present invention falls within a range of preferably no less than 50 ppm and no greater than 500 ppm based on the solid content. When the content is less than 50 ppm, sufficient adhesiveness of the coated film may not be achieved. In contrast, when the content exceeds 500 ppm, economical disadvantages results as no greater effect can be attained.
The content is more preferably no less than 100 ppm and no greater than 300 ppm based on the solid content, and still more preferably falls within a range of no less than 150 ppm and no greater than 250 ppm.

### Alkoxysilane Containing a Hydroxyl Group

The alkoxysilane containing a hydroxyl group included in the chemical conversion treatment agent used in the present invention is a compound, which has at least one alkyl chain in the molecule, in which the at least one alkyl chain has at least one hydroxyl group, and which includes an alkoxy group as a functional group that binds to the rest of the dangling bond of silicon. Since the alkoxysilane containing a hydroxyl group acts on both the conversion coating film and the coated film formed later, adhesiveness of both films can be improved.

Such an effect arises as silanol produced by hydrolysis of the alkoxy group is covalently adsorbed on the surface of the metallic structure, or on the surface of the zirconium coating film.

In addition, since the alkoxysilane containing a hydroxyl group included in the conversion coating film acts not only on the metallic structure but also on the coated film formed later, it is believed to serve in improving the adhesiveness to one another. In particular, the alkoxysilane containing a hydroxyl group can exhibit an effect to improve adhesiveness to the coated film formed with a cation electrodeposition paint.

The alkoxysilane containing a hydroxyl group included in the chemical conversion treatment agent used in the present invention preferably contains nitrogen (for example, an amino group, an amide group or the like).

Furthermore, the alkoxysilane containing a hydroxyl group included in the chemical conversion treatment agent used in the present invention is represented by the following general formula (1): 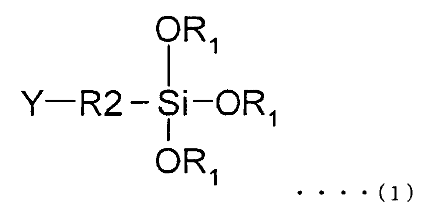 wherein: each R₁ independently represents an alkyl group having 1 to 4 carbon atoms; R₂ represents an alkylene group having 1 to 6 carbon atoms; and Y represents a gluconamide group, or an amino group represented by the formula: R₃R₄N-; wherein: R₃ represents a hydroxyalkyl group having 1 to 6 carbon atoms, or an alkyl group having 1 to 6 carbon atoms; and R₄ represents a hydroxyalkyl group having 1 to 6 carbon atoms.

The alkoxysilane containing a hydroxyl group is not particularly limited, and examples thereof include bis(2-hydroxyethyl)-3-aminopropyltriethoxysilane, N-(hydroxyethyl)-N-methylaminopropyltrimethoxysilane, N-(3-triethoxysilylpropyl)gluconamide, and the like.

### Content of Alkoxysilane Containing a Hydroxyl Group

The content of the alkoxysilane containing a hydroxyl group included in the chemical conversion treatment agent used in the present invention preferably falls within a range of no less than 10 ppm and no greater than 100 ppm based on the solid content. When the content is less than 10 ppm, sufficient adhesiveness of the coated film may not be achieved. In contrast, when the content exceeds 100 ppm, economical disadvantage results as no greater effect can be attained. The content is more preferably no less than 20 ppm and no greater than 80 ppm based on the solid content, and still more preferably falls within a range of no less than 40 ppm and no greater than 60 ppm.

### pH of Chemical Conversion Treatment Agent

The pH of the chemical conversion treatment agent used in the present invention is preferably no less than 2.8 and no greater than 4.5. When the pH is less than 2.8, sufficient formation of the coating film may not be attained due to excessive etching, or an non-uniform coating film is formed which may adversely affect the appearance of a paint coating.

In contrast, when the pH is greater than 4.5, etching may become insufficient, thereby leading to failure in obtaining a favorable coating film. The pH is more preferably no less than 2.8 and no greater than 4.2, and still more preferably falls within a range of no less than 2.8 and no greater than 3.7.

The pH of the chemical conversion treatment agent can be adjusted using an acidic compound such as nitric acid or sulfuric acid, and a basic compound such as sodium hydroxide, potassium hydroxide or ammonia.

### Agent for Imparting Adhesiveness and Corrosion Resistance

It is preferred that the chemical conversion treatment agent used in the present invention further includes at least one agent for imparting adhesiveness and corrosion resistance selected from the group consisting of an iron ion, a magnesium ion, a zinc ion, a calcium ion, an aluminum ion, a gallium ion, an indium ion, and a copper ion. In the present invention, the conversion coating film having more favorable adhesiveness and corrosion resistance can be obtained by including the agent for imparting adhesiveness and corrosion resistance.

### Content of Agent for Imparting Adhesiveness and Corrosion Resistance

The content of the agent for imparting adhesiveness and corrosion resistance optionally added to the chemical conversion treatment agent used in the present invention preferably falls within a range of no less than 1 ppm and no greater than 5000 ppm. When the content is less than 1 ppm imparting the adhesiveness and corrosion resistance cannot be sufficient. In contrast, when the content exceeds 5000 ppm, an economical disadvantage results as no additional effect can be attainted, otherwise, the adhesiveness following painting may deteriorate. The content falls within a range of more preferably no less than 25 ppm and no greater than 1000 ppm.

### Other Component

In the chemical conversion treatment agent used in the present invention, an optional component may be included in combination as needed in addition to the aforementioned components. An exemplary component that can be used is silica and the like. By adding such a component, an improvement in the corrosion resistance after painting is achieved.

Furthermore, it is preferred that the chemical conversion treatment agent is an agent not substantially containing a phosphate ion. The term "not substantially containing a phosphate ion" means that a phosphate ion is not included in an amount to exhibit an action as a component in the chemical conversion treatment agent. By using the chemical conversion treatment agent not substantially containing a phosphate ion, use of phosphorus which is responsible for environmental burden can be avoided, and generation of sludge such as iron phosphate, and zinc phosphate can be prevented which may be produced when employing the use of a zinc phosphate-based treatment agent.

### Method of Chemical Conversion Treatment

The method of chemical conversion treatment of the present invention is not particularly limited, and can be performed under a common treatment condition by bringing the chemical conversion treatment agent into contact with the surface of the metallic structure. Examples of the method include a dipping method, a spraying method, a roll coating method and the like.

### Condition of Chemical Conversion Treatment

The treatment temperature in the chemical conversion treatment falls within a range of preferably no less than 20°C and no greater than 70°C. When the temperature is less than 20°C sufficient formation of the coating film may not be achieved, and adjustment of the temperature is necessary in summer. Also, when the temperature is greater than 70°C an economical disadvantage results as no additional effect is particularly attained. The treatment temperature preferably falls within a range of no less than 30°C and no greater than 50°C.

It is preferred that the chemical conversion time period in the chemical conversion treatment fall within a range of no shorter than 5 sec and no longer than 1100 sec. A period of no longer than 5 sec is disadvantageous as a sufficient amount of the coating film cannot be attained in this timeframe. A period of no shorter than 1100 sec is meaningless as no additional effect is attained with a further increase in the amount of the coating film. More preferably, the period falls within a range of no shorter than 30 sec and no longer than 120 sec.

In the method of chemical conversion treatment of the present invention, a surface conditioning treatment as in conventionally practiced treatment with a zinc phosphate-based chemical conversion treatment agent may not be conducted. Thus, the chemical conversion treatment of the metallic structure can be conducted with fewer steps.

### Metallic Structure

The metallic structure which may be used in the method of chemical conversion treatment of the present invention is not particularly limited, and can include a steel plate, an aluminum plate, or the like. The steel plate includes any of a cold-rolled steel plate or a hot-rolled steel plate, and a soft steel plate or a high-tensile steel plate, which is not particularly limited. Examples of the steel plate include iron-based base materials, aluminum-based base materials, zinc-based base materials, and the like. The iron-based base material means a base material constituted with iron and/or an alloy thereof; the aluminum-based base material means a base material constituted with aluminum and/or an alloy thereof; and the zinc-based base material means a base material constituted with zinc and/or an alloy thereof.

Particularly, in the present invention, the amount of the zircon coating film can be ensured enough also on, for example, aluminum coated steel plates and the like after the hot stamping, which had conventionally involved problems, and sufficient painting adhesiveness can be achieved even on metallic structure such as aluminum-coated steel plates.

Moreover, the method of chemical conversion treatment of the present invention can be simultaneously applied to a metallic structure constituted with multiple metal base materials such as iron-based base materials, aluminum-based base materials, and zinc-based base materials. Although automotive bodies, automobile parts, and the like are configured with various metallic structures such as iron, zinc, aluminum and the like, according to the method of chemical conversion treatment of the present invention, favorable chemical conversion treatment can be perfected in a single operation also on such automotive bodies, parts for automotive bodies, and the like.

The iron-based base materials used as the metallic structure of the present invention are not particularly limited, and examples thereof include cold-rolled steel plates and hot-rolled steel plates. The aluminum-based base materials are also not particularly limited, and examples thereof include 5000 series aluminum alloy, 6000 series aluminum alloy, and aluminum-coated steel plates treated by aluminum-based electroplating, hot dipping, or vapor deposition plating. Furthermore, zinc-based base materials are also not particularly limited, and examples thereof include zinc or zinc-based alloy coated steel plates treated by zinc-based electroplating, hot dipping, or vapor deposition plating, such as galvanized steel plate, zinc-nickel coated steel plate, zinc-iron coated steel plate, zinc-chromium coated steel plate, zinc-aluminum coated steel plate, zinc-titanium coated steel plate, zinc-magnesium coated steel plate, and zinc-manganese coated steel plate. There are a large variety of grades of high-tensile steel plate which vary depending on the strength and manufacturing process, including, for example, JSC440J, 440P, 440W, 590R, 590T, 590Y, 780T, 780Y, 980Y, 1180Y, and the like.

### Average Amount of Coating Film of Conversion Coating Film

The average amount of the coating film of the conversion coating film obtained by the method of chemical conversion treatment of the present invention preferably falls within a range of no less than 0.1 mg/m² and no greater than 500 mg/m² based on the total amount of the metal included in the chemical conversion treatment agent. An average amount of less than 0.1 mg/m² is not preferred because a uniform conversion coating film cannot be obtained, and hence favorable adhesiveness may not be achieved. In contrast, an average amount exceeding 500 mg/m² is economically disadvantageous as a greater effect cannot be attained. This average amount of the coating film more preferably falls within a range of no less than 5 mg/m² and no greater than 150 mg/m².

Particularly, in the method of chemical conversion treatment of the present invention, the amount of the zircon coating film can be ensured enough also on, for example, the aluminum-coated steel plates and the like after the hot stamping, which had conventionally involved problems, and sufficient painting adhesiveness can be achieved even on the metallic structure of the aluminum-coated steel plates etc. Thus, also in the case in which the chemical conversion treatment is simultaneously applied to the metallic structure constituted with multiple metal base materials including an aluminum-coated steel plate and the like, sufficient painting adhesiveness can be achieved. According to the method of chemical conversion treatment of the present invention, the average amount of the conversion coating film of no less than 10 mg/m² can be ensured also on, for example, the aluminum-coated steel plates.

### Coated Film Formed Later

As the coated film formed on the conversion coating film after the formation of the conversion coating film by the method of chemical conversion treatment of the present invention, coated films formed with a conventionally known paint such as a cation electrodeposition paint, a solvent paint, an aqueous paint, a powder paint or the like may be exemplified.

Among these, it is preferred to form a coated film later using a cation electrodeposition paint as the cation electrodeposition paint includes a resin having a functional group that exhibits reactivity or compatibility with the amino group and the hydroxyl group, whereby adhesiveness of the conversion coating film to the electrodeposition coated film can be further improved due to the action of the alkoxysilane containing an amino group and the alkoxysilane containing a hydroxyl group included in the chemical conversion treatment agent. The cation electrodeposition paint is not particularly limited, and examples thereof can include known cation electrodeposition paints such as aminated epoxy resins, aminated acrylic resins, sulfonium epoxy resins and the like.

### Pretreatment of Metallic Structure

It is preferred that the metallic structure of the present invention is subjected to a water washing treatment following a degreasing treatment of the surface of the object, before conducting the aforementioned chemical conversion treatment. The degreasing treatment is conducted in order to remove oil and stains adhered to the surface of the metallic structure. In usual cases, an immersion treatment is conducted for several minutes at a temperature from 30°C to 55°C using a degreasing agent such as a phosphate-free and nitrogen-free degreasing detergent liquid. If desired, preliminary degreasing treatment may be conducted before the degreasing treatment. Furthermore, a water washing treatment following the degreasing treatment is conducted to wash away the degreasing agent, at least once by a spray treatment with a large amount of washing water.

### Posttreatment of Member Subjected to Chemical Conversion Treatment

The chemical conversion treated member having the conversion coating film formed by the method of chemical conversion treatment of the present invention is preferably subjected to water washing treatment before the formation of the coated film to be formed later. The water washing treatment following the chemical conversion treatment is conducted at least once so as not to adversely affect adhesiveness, corrosion resistance and the like after completing the following various types of painting. In this case, it is suitable to conduct final water washing with pure water. The water washing treatment following the chemical conversion treatment may be either spray water washing or immersion water washing, and a combination of these is also acceptable for water washing. After conducting the water washing treatment following the chemical conversion treatment, the member is dried according to a known method as needed, and thereafter, the coated film is formed with various types of painting.

### EXAMPLES

Next, the present invention will be explained more specifically by way of Examples and Comparative Examples, but the present invention is not limited only to these Examples. The amount to be blended is represented by parts by weight unless otherwise stated particularly.

### Example 1

A commercially available cold-rolled steel plate (SPCC-SD, manufactured by Nippon Testpanel Co., Ltd., 70 mm x 150 mm x 0.8 mm), a zinc-coated steel plate (GA, manufactured by Nippon Testpanel Co., Ltd., 70 mm x 150 mm x 0.8 mm), a 6K21 aluminum plate for automobiles (AL, manufactured by Kobe Steel, Ltd., 70 mm x 150 mm x 0.8 mm), a high-tensile steel plate (JSC590R, manufactured by Nippon Steel Corporation, 70 mm x 150 mm x 0.8 mm), a high-tensile steel plate (JSC780T, manufactured by Nippon Steel Corporation, 70 mm x 150 mm x 0.8 mm), and a high-tensile steel plate (JSC1180Y, manufactured by Nippon Steel Corporation, 70 mm x 150 mm x 2.3 mm) were provided as metallic structures.

### Pretreatment of Metallic Structure Before Chemical Conversion Treatment

### Degreasing Treatment

Specifically, a degreasing treatment was conducted by immersing each of the aforementioned metallic structures at 43°C for 2 min in an aqueous solution containing 1.5% by weight of "agent A" and 0.9% by weight of "agent B" of "SURFCLEANER SD250 (trade name)" (manufactured by Nippon Paint Co., Ltd.) as an alkali degreasing treatment agent.

### Water Washing Treatment After Degreasing Treatment

After conducting the degreasing treatment, each metallic structure was subjected to immersion washing with a water washing bath. Thereafter, spray washing was carried out with tap water for about 30 sec.

### Chemical Conversion Treatment

Using zirconium nitrate (manufactured by Nippon Light Metal Co., Ltd.) as zirconium, hydrogen fluoride (manufactured by Wako Pure Chemical Industries, Ltd.) as fluorine, "KBM-603 (trade name)" (N-2(aminoethyl)3-aminopropyltrimethoxysilane: manufactured by Shin-Etsu Chemical Co., Ltd.) as the alkoxysilane containing an amino group, and "SIB1140.0 (trade name)" (bis(2-hydroxyethyl)-3-aminopropyltriethoxysilane: manufactured by GELEST, Inc.) as the alkoxysilane containing a hydroxyl group, a chemical conversion treatment agent was prepared having a zirconium content of 500 ppm, a fluorine content of 420 ppm, and a content of the alkoxysilane containing an amino group of 200 ppm and a content of the alkoxysilane containing a hydroxyl group of 50 ppm based on the solid content. The pH of the chemical conversion treatment agent was adjusted to 2.8 with an aqueous sodium hydroxide solution. The temperature of the chemical conversion treatment agent was regulated to 40°C, and thereafter, the metallic structure was subjected to the immersion treatment for 60 sec. Water Washing Treatment Following the Chemical Conversion Treatment

On each metallic structure subjected to the chemical conversion treatment, spray treatment was conducted with tap water for 30 sec. Subsequently, spray treatment was conducted with ion exchanged water for 10 sec.

### Electrodeposition Painting

While still wet from the water washing treatment following the chemical conversion treatment, each metallic structure was applied with a cation electrodeposition paint "POWERNICS 150 Gray (trade name)" (manufactured by Nippon Paint Co., Ltd.) to form an electrodeposition coated film. Thereafter, each metallic structure was washed with water, followed by baking by heating at 170°C for 25 min to form an electrodeposition coated film. The thus formed electrodeposition coated film had a film thickness of 25 µm following drying by baking.

### Application of Intermediate Coat

A paint for intermediate coating "ORGA P-5AN-2.0 (trade name)" (manufactured by Nippon Paint Co., Ltd.) was applied to the electrodeposition coated film by spraying. An intermediate coated film was formed by baking at a temperature of 140°C for 20 min. The thus formed intermediate coated film had a film thickness of 35 µm following drying by baking.

### Application of Top Coat

A paint for top coating "SUPERLAC M-95HBYR-511P (trade name)" (manufactured by Nippon Paint Co., Ltd.) was applied to the intermediate coated film by spraying. A top coated film was formed by baking at a temperature of 140°C for 20 min. The thus formed top coated film had a film thickness of 15 µm following drying by baking. Test plates were obtained in such a manner.

### Example 2

Test plates were obtained according to a similar procedure to Example 1 except that "SIT8189.0 (trade name)" (N-(3-triethoxysilylpropyl)gluconamide: manufactured by GELEST, Inc.) was used in place of bis(2-hydroxyethyl)-3-aminopropyltriethoxysilane used in Example 1 as the alkoxysilane containing a hydroxyl group. The results of the measurement on the resulting test plates are shown in Table 1.

### Comparative Example 1

Test plates were obtained according to a similar procedure to Example 1 except that the alkoxysilane containing a hydroxyl group was not added to the chemical conversion treatment agent. The results of the measurement on the resulting test plates are shown in Table 1.

### Test

### Secondary Adhesiveness Test (SDT)

The test plates obtained in Examples 1 to 2 and Comparative Example 1 were incised to provide two parallel cut lines running longitudinally, with a depth sufficient to reach the base metal. Then, immersion in a 5% by weight aqueous NaCl solution was carried out at 55°C for 240 hrs. After water washing and air drying, an adhesive tape "CT405A-24 (trade name)" (manufactured by Nichiban Co., Ltd.) was attached on a part including the cuts. Then, the adhesive tape was abruptly peeled. The maximum width of the paint which had adhered to the stripped adhesive tape was measured. The results are shown in Table 1.

**Table 1**

| | SPC | GA | AL | 590R | 780T | 1180Y |
|---|---|---|---|---|---|---|
| Example 1 | 0 | 0.4 | 0 | 0 | 0 | 0.8 |
| Example 2 | 0 | 0.4 | 0 | 0 | 0 | 0.8 |
| Comparative Example 1 | 0 | 0.5 | 0 | 0 | 0 | 1.8 |

| | | | | | | |
|---|---|---|---|---|---|---|
| (All units are in "mm.") | | | | | | |

### Cycle Corrosion Test (CCT)

The test plates (excluding AL) obtained in Examples 1 to 2 and Comparative Example 1 were incised to provide parallel cuts that running longitudinally, with a depth sufficient to reach the base metal. Next, a 5% aqueous NaCl solution kept at 35°C was continuously sprayed for 2 hrs in a salt spray tester kept at 35°C and a humidity of 95%. Then, the test plate was dried at 60°C and a humidity of 20 to 30% for 4 hrs, followed by keeping under a humid condition at 50°C and a humidity of 95% or higher for 2 hrs. Such a sequence of procedures repeated three times in 24 hours was defined as one cycle, and 50 cycles were carried out. After carrying out 50 cycles, the maximum width of the bulged portion from the cut part on one side was measured. The results are shown in Table 2.

**Table 2**

| | SPC | GA | 590R | 780T | 1180Y |
|---|---|---|---|---|---|
| Example 1 | 0.8 | 0.5 | 1.2 | 2.5 | 3.0 |
| Example 2 | 0.8 | 0.5 | 1.2 | 2.4 | 2.8 |
| Comparative Example 1 | 1.0 | 0.7 | 1.6 | 2.8 | 3.8 |

| | | | | | |
|---|---|---|---|---|---|
| (All units are in "mm.") | | | | | |

As shown in Table 1, when SPC, AL, 590R, or 780T were used as the metallic structure, no detachment of the paint was found in Examples 1 and 2. Furthermore, when GA, or 1180Y was used as the metallic structure, detachment of the paint was significantly less in both Examples 1 and 2 than in Comparative Example 1. Therefore, it was determined that more satisfactory base metal concealability and coated film adhesiveness could be achieved in every case in which a metallic structure is subjected to the chemical conversion treatment, according to the present invention.

As shown in Table 2, corrosion could be significantly suppressed on all metallic structures in Examples 1 and 2 compared to that of Comparative Example 1.
Therefore, it was determined that more satisfactory corrosion resistance could be achieved in every case in which a metallic structure is subjected to the chemical conversion treatment according to the present invention.

### INDUSTRIAL APPLICABILITY

The chemical conversion treated member obtained according to the present invention exhibits sufficient base metal concealability, coated film adhesiveness and corrosion resistance of the surface of any metallic structure; therefore, it is preferably used in a field of, for example, automotive bodies before painting, exposed plates of vehicles such as bodies of two-wheeled vehicles, various types of parts, outer faces of vessels, coil coatings, and the like, which will be subjected to subsequent painting treatment.

## Claims

1. A method of chemical conversion treatment for forming a chemical conversion coating film comprising treating a metallic structure with a chemical conversion treatment agent,
wherein: the chemical conversion treatment agent comprises zirconium, fluorine, an alkoxysilane that contains an amino group, and an alkoxysilane that contains a hydroxyl group;
content of zirconium in the chemical conversion treatment agent is no less than 100 ppm and no greater than 700 ppm expressed with respect to metal content;
content of the alkoxysilane that contains an amino group is no less than 50 ppm and no greater than 500 ppm based on solid content;
molar ratio of fluorine to zirconium is no less than 3.5 and no greater than 7.0; and
pH of the chemical conversion treatment agent is no less than 2.8 and no greater than 4.5.

2. The method of chemical conversion treatment according to claim 1, wherein content of the alkoxysilane that contains a hydroxyl group in the chemical conversion treatment agent is no less than 10 ppm and no greater than 100 ppm based on solid content.

3. The method of chemical conversion treatment according to claim 1 or 2,
wherein the alkoxysilane that contains a hydroxyl group is represented by the following general formula (1): 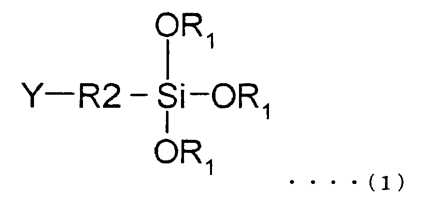 wherein: each R₁ independently represents an alkyl group having 1 to 4 carbon atoms;
R₂ represents an alkylene group having 1 to 6 carbon atoms; and
Y represents a gluconamide group, or an amino group represented by the formula: R₃R₄N-;
wherein: R₃ represents a hydroxyalkyl group having 1 to 6 carbon atoms, or an alkyl group having 1 to 6 carbon atoms; and
R₄ represents a hydroxyalkyl group having 1 to 6 carbon atoms.

4. A chemical conversion treated member comprising a conversion coating film formed by the method of chemical conversion treatment according to any one of claims 1 to 3.

5. A chemical conversion treatment agent comprising zirconium, fluorine, an alkoxysilane that contains an amino group, and an alkoxysilane that contains a hydroxyl group,
wherein: content of zirconium is no less than 100 ppm and no greater than 700 ppm expressed with respect to metal content;
content of the alkoxysilane that contains an amino group is no less than 50 ppm and no greater than 500 ppm based on solid content;
content of the alkoxysilane that contains a hydroxyl group is no less than 10 ppm and no greater than 100 ppm based on solid content;
molar ratio of fluorine to zirconium is no less than 3.5 and no greater than 7.0; and
pH of the chemical conversion treatment agent is no less than 2.8 and no greater than 4.5.

## Patentansprüche

1. Verfahren zur chemischen Umwandlungsbehandlung zum Ausbilden eines chemischen Umwandlungs-Beschichtungsfilms, umfassend Behandlung eines metallischen Aufbaus mit einem chemischen Umwandlungs-Behandlungsmittel,
wobei: das chemische Umwandlungs-Behandlungsmittel Zirkonium, Fluor, ein Alkoxysilan, welches eine Aminogruppe enthält, und ein Alkoxysilan, welches eine Hydroxylgruppe enthält, umfasst;
ein Gehalt von Zirkonium in dem chemischen Umwandlungs-Behandlungsmittel nicht niedriger als 100 ppm und nicht größer als 700 ppm, ausgedrückt bezüglich eines Metallgehalts, ist;
ein Gehalt des Alkoxysilans, welches eine Aminogruppe enthält, nicht niedriger als 50 ppm und nicht größer als 500 ppm, basierend auf einem Feststoffgehalt, ist;
ein molares Verhältnis von Fluor zu Zirkonium nicht niedriger als 3,5 und nicht größer als 7,0 ist; und
ein pH-Wert des chemischen Umwandlungs-Behandlungsmittels nicht niedriger als 2,8 und nicht größer als 4,5 ist.

2. Verfahren zur chemischen Umwandlungsbehandlung nach Anspruch 1, wobei ein Gehalt des Alkoxysilans, welcher eine Hydroxylgruppe enthält, in dem chemischen Umwandlungs-Behandlungsmittel nicht niedriger als 10 ppm und nicht größer als 100 ppm, basierend auf einem Feststoffgehalt, ist.

3. Verfahren zur chemischen Umwandlungsbehandlung nach Anspruch 1 oder 2,
wobei das Alkoxysilan, welches eine Hydroxylgruppe enthält, durch die folgende allgemeine Formel (1) repräsentiert wird: 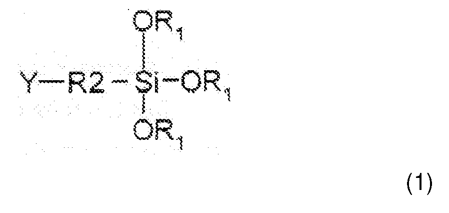 wobei: jedes R₁ unabhängig eine Alkylgruppe darstellt, welche 1 bis 4 Kohlenstoffatome aufweist;
R₂ eine Alkylengruppe darstellt, welche 1 bis 6 Kohlenstoffatome aufweist; und
Y eine Gluconamidgruppe oder eine Aminogruppe, die durch die Formel: R₃R₄N-repräsentiert wird, repräsentiert;
wobei: R₃ eine Hydroxyalkylgruppe darstellt, welche 1 bis 6 Kohlenstoffatome aufweist, oder eine Alkylgruppe, welche 1 bis 6 Kohlenstoffatome aufweist; und
R₄ eine Hydroxyalkylgruppe darstellt, welche 1 bis 6 Kohlenstoffatome aufweist.

4. Chemisch umwandlungsbehandeltes Bauelement, umfassend einen Umwandlungs-Beschichtungsfilm, welcher durch das Verfahren zur chemischen Umwandlungsbehandlung nach irgendeinem der Ansprüche 1 bis 3 ausgebildet ist.

5. Chemisches Umwandlungs-Behandlungsmittel, umfassend Zirkonium, Fluor, ein Alkoxysilan, welches eine Aminogruppe enthält, und ein Alkoxysilan, welches eine Hydroxylgruppe enthält,
wobei: ein Gehalt von Zirkonium nicht niedriger als 100 ppm und nicht größer als 700 ppm ist, ausgedrückt bezüglich des Metallgehalts;
ein Gehalt von Alkoxysilan, welches eine Aminogruppe enthält, nicht niedriger als 50 ppm und nicht größer als 500 ppm ist, basierend auf einem Feststoffgehalt;
ein Gehalt von Alkoxysilan, welches eine Hydroxylgruppe enthält, nicht niedriger als 10 ppm und nicht größer als 100 ppm ist, basierend auf einem Feststoffgehalt;
ein molares Verhältnis von Fluor zu Zirkonium nicht niedriger als 3,5 und nicht größer als 7,0 ist; und
ein pH-Wert von dem chemischen Umwandlungs-Behandlungsmittel nicht kleiner als 2,8 und nicht größer als 4,5 ist.

## Revendications

1. Procédé de traitement de conversion chimique pour former un film de revêtement de conversion chimique comprenant le traitement d'une structure métallique avec un agent de traitement de conversion chimique, dans lequel :
l'agent de traitement de conversion chimique comprend du zirconium, du fluor, un alcoxysilane qui contient un groupe amino, et un alcoxysilane qui contient un groupe hydroxyle ;
la teneur du zirconium dans l'agent de traitement de conversion chimique n'est pas inférieure à 100 ppm et pas supérieure à 700 ppm, exprimée par rapport à la teneur en métal ;
la teneur de l'alcoxysilane qui contient un groupe amino n'est pas inférieure à 50 ppm et pas supérieure à 500 ppm, par rapport à la teneur en matières solides ;
le rapport molaire du fluor au zirconium n'est pas inférieur à 3,5 et pas supérieur à 7,0 ; et
le pH de l'agent de traitement de conversion chimique n'est pas inférieur à 2,8 et pas supérieur à 4,5.

2. Procédé de traitement de conversion chimique selon la revendication 1, dans lequel la teneur de l'alcoxysilane qui contient un groupe hydroxyle dans l'agent de traitement de conversion chimique n'est pas inférieure à 10 ppm et pas supérieure à 100 ppm, par rapport à la teneur en matières solides.

3. Procédé de traitement de conversion chimique selon la revendication 1 ou 2, dans lequel l'alcoxysilane qui contient un groupe hydroxyle est représenté par la formule générale (1) suivante : 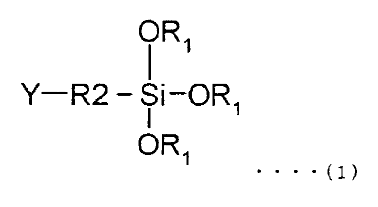 dans laquelle : chaque R₁ représente indépendamment un groupe alkyle comportant 1 à 4 atomes de carbone ;
R₂ représente un groupe alkylène comportant 1 à 6 atomes de carbone ; et
Y représente un groupe gluconamide ou un groupe amino représenté par la formule :
R₃R₄N- ;
dans laquelle : R₃ représente un groupe hydroxyalkyle comportant 1 à 6 atomes de carbone ou un groupe alkyle comportant 1 à 6 atomes de carbone ; et
R₄ représente un groupe hydroxyalkyle comportant 1 à 6 atomes de carbone.

4. Elément traité par conversion chimique comprenant un film de revêtement de conversion formé par le procédé de traitement de conversion chimique selon l'une quelconque des revendications 1 à 3.

5. Agent de traitement de conversion chimique comprenant du zirconium, du fluor, un alcoxysilane qui contient un groupe amino, et un alcoxysilane qui contient un groupe hydroxyle, dans lequel :
la teneur du zirconium n'est pas inférieure à 100 ppm et pas supérieure à 700 ppm, exprimée par rapport à la teneur en métal ;
la teneur de l'alcoxysilane qui contient un groupe amino n'est pas inférieure à 50 ppm et pas supérieure à 500 ppm, par rapport à la teneur en matières solides ;
la teneur de l'alcoxysilane qui contient un groupe hydroxyle n'est pas inférieure à 10 ppm et pas supérieure à 100 ppm, par rapport à la teneur en matières solides ;
le rapport molaire du fluor au zirconium n'est pas inférieur à 3,5 et pas supérieur à 7, 0 ; et
le pH de l'agent de traitement de conversion chimique n'est pas inférieur à 2,8 et pas supérieur à 4,5.
